# EUROPEAN PATENT APPLICATION

(11) **EP 0 700 948 A2**
(43) Date of publication of application: **13.03.1996**
(21) Application number: 95306290.8
(22) Date of filing: 08.09.1995
(51) Int. Cl.: C08G 63/20, C08L 67/06

(54) **Low-profile additive for unsaturated polyesters**

(30) Priority: 09.09.1994 US 303896
(71) Applicant: OWENS-CORNING FIBERGLAS CORPORATION, Toledo, Ohio 43659 (US)
(72) Inventor: Cheung, William K., Westerville, Ohio 43081 (US); Krumlauf, Paul R., Thornville, Ohio 43081 (US); Hardebeck, Steve P., Valpariaso, Indiana 46383 (US)
(74) Representative: West, Alan Harry

(57) **Abstract**

There is described a polyester rest system comprising an unsaturated polyester, an unsaturated monomer, divinyl benzene and a trimellitic anhydride low-profile additive. These systems are useful as the bases of sheet moulding compounds for making automotive "class A" body panels, for example.

## Description

The present invention provides unsaturated polyester resin compositions that contain one or more unsaturated polyesters and ethylenically unsaturated monomers that copolymerize with the unsaturated polymer. Typical formulations include unsaturated polyesters of maleic anhydride and propylene glycol, and unsaturated monomers of styrene.

Unsaturated polyester resin compositions are finding increased use in the automotive industry as sheet moldings compound (SMC) formulations from which component parts, especially body panels, can be molded. The unsaturated polyester resin compositions contain, in addition to the unsaturated polyesters and monomer components, so-called "low-profile" additives which are thermoplastic polymers that act to prevent undesirable shrinkage as the composition is being molded into a thermoset article. Low-profile additives are added to unsaturated polyester resin compositions in order to obtain a composition which can be used in a sheet molding compound and molded into thermoset articles.

Recent developments include a fourth component that remains compatible during the curing of the polyester and monomer. The compatible component improves surface smoothness especially during compression or injection molding. See U.S. Patent No. 5,089,544 and other subsequently issued patents.

Dicyclopentadiene (DCPD) end capped polyester resins often have poor adhesion. By end caps we mean DCPD reacts with the ends of the polymer chain. DCPD end capped polyesters have excellent surface properties; however, poor bonding limits their use in Automotive Class "A" surface resins. We now have developed a DCPD end capped polyester resin with good adhesive bonding and excellent surface smoothness.

We have found that the DCPD tends to migrate to the plaque surface during compression molding to produce a nonbondable surface. We have developed a formulation that reduces this orange peel problem, as well as improve adhesive bonding. Our improvement is a polyester resin composition consisting essentially of a dicyclopentadiene terminated unsaturated polyester comprising a polycondensation product or dicyclopentadiene, one or more dihydric alcohols, and one or more ethylenically unsaturated polycarboxylic acids; at least one low-profile thermoplastic additive comprising a reaction product of trimellitic anhydride, one or more dihydric alcohols, and one or more saturated polycarboxylic acids; divinyl benzene; and at least one olefinically unsaturated monomer which copolymerizes with the unsaturated polyester, wherein the monomer is different from divinyl benzene.

Our preferred composition consists essentially of a dicyclopentadiene terminated unsaturated polyester comprising a polycondensation product of dicyclopentadiene, propylene glycol, and maleic acid or its anhydride; a low-profile thermoplastic additive comprising a reaction product trimellitic anhydride, ethylene glycol, methylpropane diol and adipic acid or its anhydride; divinyl benzene; and styrene monomer.

The DCPD end capped unsaturated polyester comprises the polycondensation reaction product of one or more dihydric alcohols and one or more ethylenically unsaturated polycarboxylic acids. Polycarboxylic acid is generally meant the polycarboxylic or dicarboxylic acids or anhydrides, polycarboxylic or dicarboxylic acid halides, and polycarboxylic or dicarboxylic esters. Suitable unsaturated polycarboxylic acids, and the corresponding anhydrides and acid halides that contain polymerizable carbon-to-carbon double bonds, may include maleic anhydride, maleic acid, and fumaric acid. A minor proportion of the unsaturated acid, up to about forty mole percent, may be replaced by dicarboxylic or polycarboxylic acid that does not contain a polymerizable carbon-to-carbon bond. Examples of which include O-phthalic, isophthalic, terephthalic, succinic, adipic, sebacic, methly-succinic, and the like. Dihydric alcohols that are useful in preparing the polyesters include 1,2-propane diol (hereinafter referred to as propylene glycol), dipropylene glycol, diethylene glycol, 1,3-butanediol, ethylene glycol, glycerol, and the like. Examples of suitable unsaturated polyesters are the polycondensation products of (1) propylene glycol and maleic and/or fumaric acids; (2) 1,3-butanediol and maleic and/or fumaric acids; (3) combinations of ethylene and propylene glycols (approximately 50 mole percent or less of ethylene glycol) and maleic and/or fumaric acids; (4) propylene glycol, maleic and/or fumaric acids and dicyclopentadiene.

The dicyclopentadiene modified unsaturated polyester resins are described in Pratt, et al., U.S. Patent No. 3,883,612. The preferred process for synthesizing the dicyclopentadiene-terminated polyester polymer includes first producing a prepolymer by esterifying dicyclopentadiene with the unsaturated alcohol, whereby dicyclopentadiene will be preferentially tied to the polyester backbone by ester linkages.

The acid number to which the polymerizable unsaturated polyesters are condensed is not particularly critical with respect to the ability of the low-profile resin to be cured to the desired product. Polyesters which have been condensed to acid numbers of less than 100 are generally useful, but acid numbers less than 70 are preferred. The molecular weight of the polymerizable unsaturated polyester may vary over a considerable range, but ordinarily those polyesters useful in the practice of the present invention have a molecular weight ranging from 300 to 5000 and, more preferably, from about 500 to 5000.

In preferred embodiments, the unsaturated polyester is present in amounts ranging from about 20 to 45 percent, by weight, based on the total four component resinous system comprising the unsaturated polyester, the low-profile additive, monomer, and compatible component. Especially preferred concentrations of the unsaturated polyester are in the 28 to 35 percent, by weight, range.

Low-profile additives are materials that, when mixed in an unsaturated polyester and cured, result in a multiphase system. If the low-profile additive and the unsaturated polyester are compatible (from the standpoint that a gross phase separation does not take place) before cure, the system is known as a one-pack resin system. This does, however, necessitate mixing immediately before use. Some polymers that are useful as low-profile additives include homopolymers and copolymers of acrylic and methacrylic acid esters, cellulose acetate butyrate, vinyl acetate homopolymers and copolymers, polyethylanes prepared from polyisocyanates, preferably diisocyanates, and polyether polyols, numerous saturated polyesters, polycaprolactone, styrenebutadiene copolymers, some modified celluloses and certain alkyl oxide polymers. The above list of low-profile additives is not intended to list all low-profile additives, but rather to show examples of material which have been used to cause the multiphase morphology present in low-profile resins. In preferred embodiments, the thermoplastic additive is present in amounts ranging from 5 to 40 percent, by weight. Especially preferred concentrations of thermoplastic additives are in the 7 to 20 percent, by weight, range.

The monomer component that we use in combination with divinyl benzene varies widely. The olefinically unsaturated monomer that is copolymerizible with the unsaturated polyester is most generally styrene; however, methyl-styrene is also useful. In preferred embodiments, the monomer is present in amounts ranging from 25 to 65 percent, by weight, based on the total four component resinous system. Especially preferred concentrations of monomer are in the 35 to 50 percent, by weight, range. Other unsaturated monomers are chlorostyrene, vinyl toluene, vinyl acetate, acrylic and methacrylic acid, lower alkyl esters of acrylic and methacrylic acid, diallyl phthalate and like or mixtures thereof.

The compatible components of the present invention contain one or more polyoxyethane substituents. One example of compatible components that contain polyoxyethane substituents are polymers such as a polyalkylene oxide which has a molecular weight of between about 200-5000. The molecular weight of the polyalkylene oxide polymer is such that the compatible component remains compatible with the curing unsaturated polyester and monomer. When the molecular weight of the polymer is too high, the polyalkylene oxide polymer is incompatible with the curing unsaturated polyester and monomer. At that point, the polyalkylene oxide polymer acts like a low-profile additive component, which, by definition, is incompatible with the curing unsaturated polyester and monomer. Specific examples of polyalkylene oxide polymers useful as compatible components include polypropylene oxide having a molecular weight between about 200-1000 and polyethylene oxide having a molecular weight between about 200-5000.

Other examples of compatible components containing one or more polyoxyethane substituents are polyalkoxylated alkyl phenols such as polypropoxylated nonyl phenols, polyethoxylated nonyl phenols, polypropoxylated octyl phenols, polyethoxylated octyl phenols, and the like. U.S. Patent Nos. 5,089,544 and 5,162,401 further describe the compatible components.

The sheet molding compound of this invention also may include other conventional materials. For example, conventional chemical thickeners may be physically mixed into the resin. The chemical thickeners generally include metal oxides, hydroxides, and alkoxides of Group II, III, or IV from the Periodic Table. Calcium oxide and magnesium oxide or the respective hydroxides are most often employed. In preferred embodiments, the thickener is present in amounts ranging from about 0.5 to about 6 parts, by weight. The thickener is generally suspended in a carrier resin, as is known in the art. The carrier material comprises a composition which does not react with the thickener, such as, for example, polymethylmethacrylate, polyvinylacetate, saturated or unsaturated polyesters, and similar materials. The carrier resin is present in amounts ranging from about 0.5 to about 8 parts, by weight, based on one hundred parts of the system.

Catalysts also may be incorporated in small amounts into thermosetting polyester resins containing ethylenically unsaturated monomer to aid in curing or cross-linking the unsaturated polyester with the monomer. Such catalysts are well-known and may be similarly utilized in this invention to aid in curing the unsaturated polyester and monomer mixed with the low-profile thermoplastic polymer. Typical catalysts, for example, include organic peroxide and peracids such as tertiary butyl perbenzoate, tertiary butyl peroctoate, benzoyl peroxide, and the like. The amounts of catalysts may be varied with the molding process and similarly varied with the level and types of inhibitors utilized, in a manner well known in the art. In preferred embodiments, the catalyst is present in amounts ranging from about 0.5 to about 5 parts, by weight, based on one hundred parts of the system.

Curing of the composition is carried out under heat and pressure typically, in closed, preferably positive pressure type molds. Mold release agents may be added to the compositions to perform their normal function, as is well understood in the art. In preferred embodiments, the mold release agents are present in amounts ranging from about 0.5 to about 8.0 parts, by weight, based on one hundred parts of the four component resin system.

Fibers, fillers, and pigments normally added to resin compositions can be likewise in formulating the sheet molding composition of this invention. Reinforcing fibers or fibrous reinforcement is taken to mean glass fibers in one form or another, such as glass fabrics, chopped glass strands, chopped or continuous strand glass fiber mat; however, the terms also include reinforcing agents which may also be used if desired, for example, asbestos, cotton, synthetic organic fibers and metals. Fillers, usually inert, and inorganic material useful with the compositions include, for example, clay talc, calcium carbonate, silica, calcium silicate, and the like. In preferred embodiments, the fillers are present in amounts ranging from about 165 to about 250 parts, by weight, based on one hundred parts of the system.

Examples of pigments include carbon black, iron oxide, titanium dioxide, and the like, as well as organic pigments. In preferred embodiments, the pigments are present in amounts ranging from about 0 to about 10 parts, by weight, based on one hundred parts of the four component resinous system.

In one aspect of the present invention, the preparation of the sheet molding composition is generally carried out by blending together a first portion comprising the unsaturated polyester, the low-profile additive, the monomer, and such additives as a catalyst, mold release agent and fillers. This is generally known in the industry as the A-side formulation. The second portion (generally known as the B-side formulation) comprises the thickening agent and a carrier resin therefor, and such additives as pigments and mold release agents. In another aspect of the invention, an additional or secondary monomer is added to the B-side formulation in which the thickener is suspended. The additional monomer comprises vinyl toluene or styrene and is present in amounts ranging from about 1 to 8 parts, by weight, based on one hundred parts of the four component resinous system.

The sheet molding composition of the present invention can be prepared by mixing the components in a suitable apparatus of temperatures which are conventional and known to those skilled in the art. Once the sheet molding composition is formulated, the composition can be molded into thermoset articles having a desired shape. The actual molding cycle will, of course, depend upon the exact composition being molded. In preferred embodiments, suitable molding cycles are conducted at temperatures ranging from about 250°F-350°F (121°C-177°C) for periods of time ranging from about 1/3 to about 5 minutes.

The following formulations are provided to illustrate examples of the compositions of the present invention and are not intended to restrict the scope thereof. All parts are parts by weight unless otherwise expressly specified.

The following is a table showing the formulation ranges for the compositions of this invention.

**Table I - Low-Profile Additive Composition**

| Reactant | Range (wt.%) | Preferred Range (wt.%) |
|---|---|---|
| Ethylene glycol | <0-30 | 10-20 |
| Nonpolar diol (methyl propanediol) | <0-20 | 5-15 |
| Adipic acid | 40-70 | 40-50 |
| Trimellitic anhydride | 0.1-5.0 | 0.4-3.0 |

While this describes a specific low-profile additive composition, it is clear that other nonpolar diols, glycols and/or other dicarboxylic acids may be added in low concentrations without disturbing the function of this low-profile additive composition in unsaturated polyester resins.

The following is our new formulation using trimellitic anhydride LPA.

**Table II**

| Contents | Parts by Weight |
|---|---|
| Unsaturated Polyester (DCPD capped propyleneglycol maleate) | 50.9 |
| TMA LPA of Table I | 25 |
| Styrene (monomer) | 18.1 |
| Polypropyleneoxide | 4 |
| DVB (divinylbenzene) | 2 |
| TBPB (initiator) | 1.5 |
| Calcium Stearate (mold release) | 4 |
| Calwhite (II) (filler) | 220 |
| B-side; magnesium hydroxide with vinyltoluene, acrylic copolymer, zinc stearate, carbon black | 14 |

In order to be used as "class A" body panel resins, the molded plaques must have the following fitness-for-use properties.

**Fitness-For-Use**
1. No slime - 100 lbs. (45 kg) over a stack of 12 by 12 inches (305 by 305 mm) festoon.
2. Tensile properties - > 9E03 pound (62.1 MPa) per square inch (25.4 mm).
3. Pass Inmold-Coating (IMC) Adhesion Test - Before and after Elpo bake.
4. Pass paint adhesion tests - Before and after Elpo bake.
5. Low water absorption - ASTM D-570.
6. Has good surface - Loria number lower than 70.
7. Has little orange peel - Orange Peel Index greater than 8.

The inventive formulation met all criteria.

The highlight of our invention is that we have formulated resins that have excellent molding, IMC, and adhesives bonding properties with DVB and TMA LPA in them. The key ingredient for adhesion enhancement in the formulation is the combination of DVB with the TMA LPA which slows down the migration of DCPD to the surface during the compression molding process. Without DVB the formulation will not yield material that can be bonded. This formulation improves IMC and reduces orange peel. The Orange Peel Index was 10.2.

## Claims

1. A thermoplastic polymer comprising a reaction product of
trimellitic anhydride
one or more dihydric alcohols and
one or more saturated polycarboxylic acids.

2. A thermoplastic polymer according to claim 1, consisting essentially of units derived from 15-20 weight percent ethylene glycol, 10-15 weight percent at least one nonpolar diol, 64-70 weight percent adipic acid and 0.4-3.0 weight percent trimellitic anhydride.

3. A thermoplastic polymer according to claim 2, wherein the nonpolar diol comprises 2-methyl-1,3-propane diol, 1,2-propane diol, 1,3-butane diol or a mixture of any two or all three thereof.

4. A resin system for sheet molding compound consisting essentially of:
(a) a dicyclopentadiene-terminated unsaturated polyester comprising a polycondensation product of dicyclopentadiene, one or more dihydric alcohols and one or more ethylenically unsaturated polycarboxylic acids;
(b) at least one low-profile additive comprising a thermoplastic polymer according to any one of claims 1 to 3;
(c) divinyl benzene; and
(d) at least one olefinically unsaturated monomer other than divinyl benzene which copolymerizes with the unsaturated polyester.

5. A resin system according to claim 4, wherein the ethylenically unsaturated monomer (d) comprises styrene, methyl-styrene or vinyl toluene.

6. A resin system according to claim 4, consisting essentially of:
(a) a dicyclopentadiene-terminated unsaturated polyester comprising a polycondensation product of dicyclopentadiene, propylene glycol and maleic acid or its anhydride;
(b) a low-profile additive comprising a reaction product of trimellitic anhydride, ethylene glycol, methylpropane diol, and adipic acid or its anhydride;
(c) divinyl benzene; and
(d) styrene.

7. A resin system according to any one of claims 4 to 6, including a compatible component.

8. A resin system according to claim 7 including a compatible component containing polyoxyethylene or polyoxypropylene groups.

9. A sheet molding compound comprising a resin system according to any one of claims 4 to 8 together with one or more of fillers, thickeners, catalysts and reinforcing glass fibers.
